# FASCICULE DE BREVET EUROPEEN

(11) **EP 0 534 540 B1**
(45) Date de publication et mention de la délivrance du brevet: **04.06.1997**
(21) Numéro de dépôt: 92202865.9
(22) Date de dépôt: 18.09.1992
(51) Int. Cl.: B65G 1/04, B65G 1/16, B21D 43/20

(54) **Bâtis pour magasins de tôles ou autres charges lourdes à orientation substantiellement verticale**
Lagergestelle für Bleche oder anderes Schwergut mit im wesentlichen senkrechter Ausrichtung
Storage racks for metal plates or other heavy goods having a substantially vertical orientation

(30) Priorité: 24.09.1991 IT VI910152
(43) Date de publication de la demande: 31.03.1993
(73) Titulaire: Trento, Bruno, I-35100 Padova (IT)
(72) Inventeur: Trento, Bruno, I-35100 Padova (IT)
(74) Mandataire: Bettello, Luigi, Dott. Ing.

(56) Documents cités:
- EP-A- 0 170 221
- DE-A- 3 411 195
- US-A- 1 840 972
- TECHNICA vol. 29, no. 17, 1980, pages 1385 - 1393 BRUNO A. GREUB

## Description

La présente invention a pour objet des bâtis pour magasins de tôles ou autres charges lourdes à orientation substantiellement verticale en vue de simplifier les opérations pour le déchargement des produits hors des bâtis en réduisant sensiblement le caractère dangereux de l'installation, ce point étant particulièrement important dans le cas de charges lourdes (on atteint fréquemment des poids de l'ordre de 7 000kg ou même plus pour un seul paquet de tôles).

On sait que les magasins pour la distribution d'objets pesants, notamment de tôles en fer ou autres matériaux du même genre, comportent toujours un caractère dangereux lors des manoeuvres de chargement et de déchargement, et ce aussi bien par suite du poids élevé de ces matériaux qu'en raison des difficultés du stockage de ceux-ci dans les bâtis correspondants.

Le danger se révèle d'autant plus important qu'est plus élevée la hauteur à laquelle doivent être chargés et déchargés les paquets de produits dans le magasin, le caractère dangereux visant par dessus tout le personnel affecté à ces opérations, mais s'étendant également aux bâtis eux-mêmes qui, en cas d'accident, peuvent être gravement endommagés.

La technique anterieure est representée par le document "Technicor", vol. 29, no. 17, 1980, pages 1385-1393, GRUEB qui décrit un magasin pour la conservation de tôles, avec une disposition essentiellement horizontale et avec des moyens de déplacement horizontal soit pour le chargement que pour le déchargement des tôles du magasin.

L'invention s'est fixé pour but de rationaliser les opérations de chargement et de déchargement, en rendant nettement moins dangereux l'appareillage correspondant et en réduisant au minimum les risques d'accident au personnel affecté aux opérations ainsi que les autres risques d'endommagement du matériel provoqués par ces accidents.

Les bâtis suivant l'invention sont définis dans la revendication.

Leur originalité réside principalement dans le fait de pouvoir emmagasiner des paquets de tôles ou d'autres produits à orientation substantiellement verticale, et d'être équipés d'un chariot mobile le long du magasin pour recevoir l'un des paquets précités, amener à l'aide d'un vérin ce paquet à la position horizontale et le soulever de son support au moyen d'autres vérins, de façon à ce qu'il soit disponible pour le prélèvement d'une ou de plusieurs tôles ou autres matériaux en feuilles à partir dudit paquet.

Cette caractéristique permet par dessus tout de réduire de manière sensible le volume occupé par le magasin, ainsi que les temps nécessaires aux opérations de chargement et de déchargement, avec de fortes incidences sur les coûts correspondants de fonctionnement.

L'invention va maintenant être décrite de manière plus détaillée avec l'aide du dessin annexé :
La fig. 1 est une vue schématique en élévation montrant un bâti suivant l'invention, avec les paquets de tôles entièrement emmagasinés à l'intérieur de ce bâti.
La fig. 2 représente le bâti avec le paquet de tôles partiellement amené sur le chariot de déchargement.
La fig. 3 montre le bâti avec le paquet de tôle entièrement amené sur le chariot de déchargement.
La fig. 4 est une vue de côté du bâti, avec le chariot prêt à recevoir un paquet de tôles à décharger.
La fig. 5 est une vue de côté du bâti, représenté avec le chariot de déchargement placé devant lui et avec un paquet de tôles prenant appui sur ledit chariot.
La fig. 6 représente le chariot de déchargement, avec les tôles d'un paquet en position horizontale, soulevées par rapport au support dudit paquet.
La fig. 7 est une vue de détail de la partie inférieure du paquet à décharger.
La fig. 8 montre partiellement la partie supérieure du paquet en cours de déchargement.
La fig. 9 est une vue de détail montrant la partie inférieure du paquet, montée sur le plateau mobile du chariot.
La fig. 10 illustre en détail le système pour l'accrochage de la tige des vérins d'extraction associée au chariot.

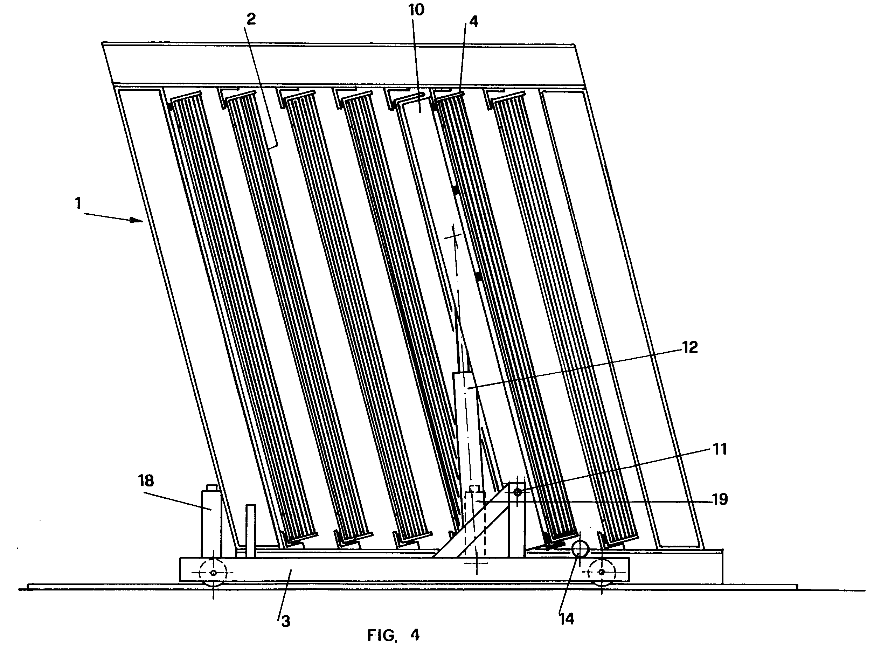

Comme on peut notamment le voir en fig. 4, le bâti 1 comprend un certain nombre de paquets de tôles 2 disposées suivant une orientation substantiellement verticale, tandis que le chariot 3 assure l'extraction, hors du bâti, de l'un des paquets contenus afin de l'amener en position horizontale, puis, après prélèvement dans le paquet des tôles désirées, le ramener à l'intérieur du bâti à la position verticale d'origine.

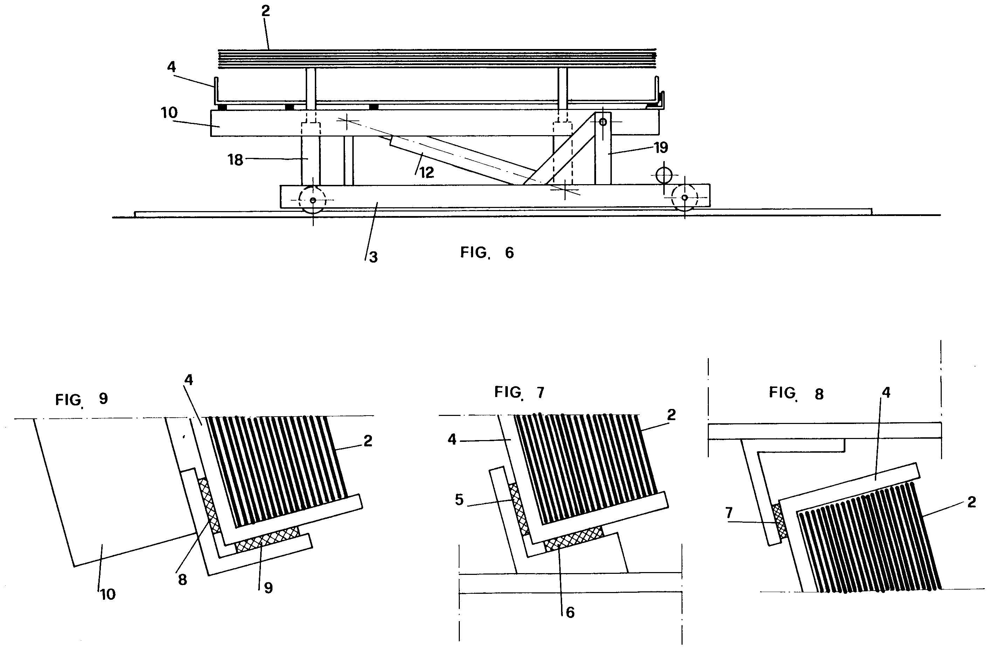

Comme on peut mieux le voir en fig. 7, chaque paquet de tôle est soutenu par un support 4 qui coulisse sur des glissières 5 et 6 en une matière plastique spéciale, propre à permettre un coulissement aisé du support, sans friction excessive.

De la même manière, la partie supérieure du support 4 (fig. 8) se déplace sur une coulisse 7, elle-même réalisée en une matière plastique spéciale. Lorsque le support 4 est déplacé latéralement dans un sens ou dans l'autre, il prend appui contre les coulisses 8 et 9 (fig. 9) prévues sur la plateforme 10 en tournant sur un pivot 11 (fig. 4) sous l'action du piston du vérin de commande 12.

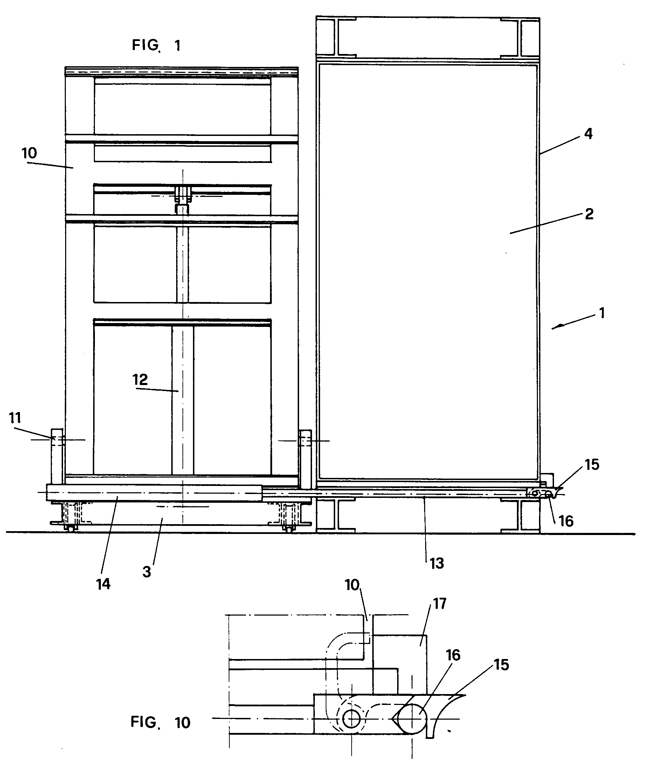

Comme on peut bien le voir en fig. 1, le support 4 qui renferme le paquet de tôles 2 qui a été choisi et à partir duquel peuvent être prélevées une ou plusieurs tôles à livrer à la demande, est saisi par un crochet approprié prévu à l'extrémité de la tige mobile 13 d'un vérin 14 ; ce crochet terminal, montré en 15 en fig. 10, coopère avec le tirant 16 solidaire de brides 17, prévues sur le support 4 à extraire.

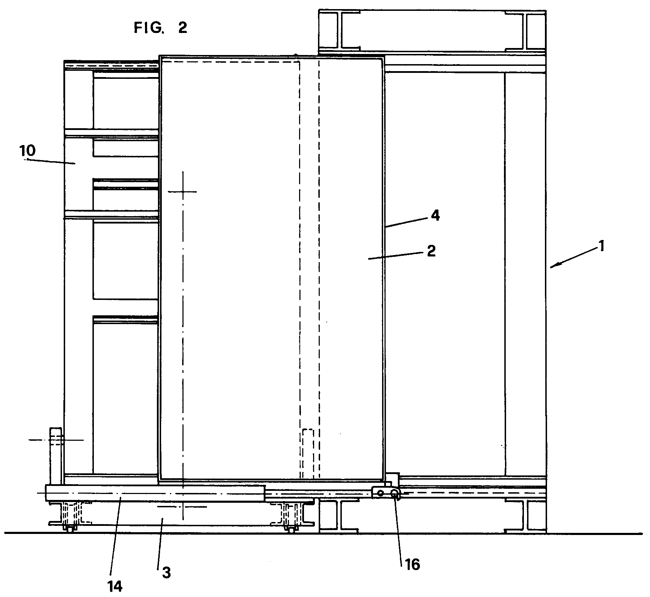

En fig. 2, le support 4 est représenté à l'état partiellement extrait du châssis 1, tout en étant partiellement engagé sur la plateforme de déchargement 10.

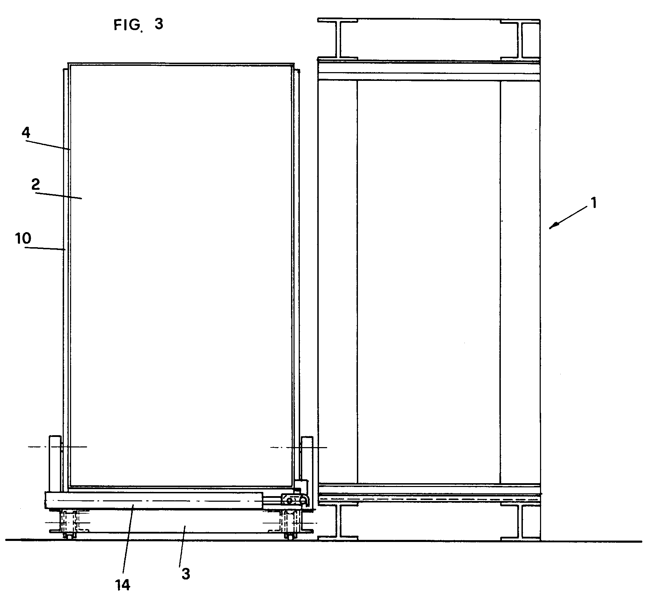

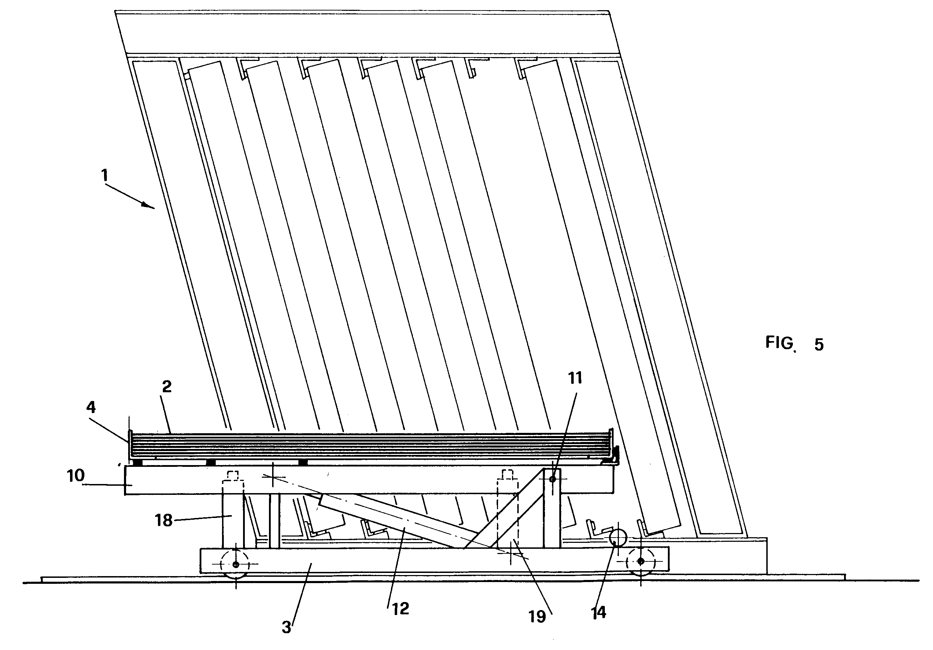

En fig. 3, le paquet est entièrement extrait du châssis 1 et repose désormais sur la plateforme 10. A ce moment cette plateforme 10 est abaissée par le vérin 12 (fig. 4) jusqu'à être amenée à la position horizontale visible en fig. 5, et ce en tournant sur le pivot 11. Les tôles renfermées par le support 4 sont soulevées par les tiges des vérins 18 et 19 (fig. 6), bien entendu au nombre de quatre, de façon à être amenées à une position propre à permettre le prélèvement aisé d'une ou plusieurs tôles, en fonction de la demande.

On fait ensuite redescendre les tôles qui restent dans le support 4, tandis que le vérin 12 ramène la plateforme 10 en position substantiellement verticale en autorisant de la sorte la réintroduction dans le bâti 1 à partir duquel elles ont été prélevées.

Toutes ces opérations sont effectuées de manière extrêmement simple et ne comportent pratiquement aucun risque pour l'opérateur, ce qui se révèle fondamental pour la sécurité sur le lieu de travail.

Bien évidemment, le même chariot peut desservir un nombre considérable de modules, étant rappelé qu'un magasin normal peut renfermer jusqu'à 100 paquets de tôles, lesquelles peuvent être distibuées le long d'une paroi d'environ 28 mètres à l'aide d'un seul chariot.

Il va de soi qu'en fonction de l'importance du magasin, le nombre des modules desservis par un seul chariot peut être quelconque, en fonction des nécessités.

De manière avantageuse, la commande des appareillages qui interviennent au cours des différentes phases de travail du bâti peut être informatisée.

Les dimensions et les caractéristiques des produits emmagasinés peuvent être quelconques, un même chariot étant susceptible de prélever des paquets de tôles ou autres produits de dimensions différentes, sans pour autant sortir du cadre du brevet.

## Revendications

1. Magasin de tôles ou autres produits lourds, comprenant un bâti (1) pour stocker les produits, placés dans des supports (4), en position substantiellement verticale, des chariots (3) pouvant se déplacer horizontalement le long de la rangée des produits, chaque chariot comprenant une plateforme (10) pivotable apte à supporter les produits, des moyens d'extraction latérale des produits, et des vérins (12) pour faire pivoter la plateforme (10) entre ladite position substantiellement verticale et une position horizontale, caractérisé en ce que les moyens d'extraction comprennent des vérins horizontaux (14) avec une tige mobile (13) et des moyens d'accrochage (15) pour saisir et extraire un support (4) comprenant des produits, en ce que le bâti et le chariot comprennent des glissières (5, 6, 7; 8, 9) pour permettre l'extraction des supports en coulissant, en ce que chaque chariot comprend des vérins verticaux (18, 19) pour soulever les produits au-dessus du niveau du support reposant sur la plateforme pour permettre le prélèvement d'un nombre désiré de produits.

## Claims

1. Storage system for metal sheets or other heavy articles, comprising a frame (1) for storing the articles, and which is positioned substantially vertically in supports (4), trucks (3) adapted to move horizontally along the row of articles, each truck having a swivelling platform (10) capable of supporting the articles, means for extracting the articles laterally, and jacks (12) for swivelling the platform (10) between the said substantially vertical position and a horizontal position, characterized in that the extraction means comprise horizontal jacks (14) with a movable rod (13) and hooking means (15) for gripping and pulling out a support (4) containing articles, that the frame and the truck have runners (5, 6, 7; 8, 9) to enable the supports to be slid out, and that each truck has vertical jacks (18, 19) for raising the articles above the level of the support resting on the platform in order to allow a desired number of articles to be picked.

## Patentansprüche

1. Lager für Bleche oder anderes Schwergut mit einem Geste (1) zum Lagern der Produkte, die in einer im wesentlichen vertikalen Lage in Halterungen (4) plaziert sind, ferner mit Laufwagen (3), die sich horizontal entlang der Reihe der Produkte bewegen können, wobei jeder Laufwagen ein zur Aufnahme der Produkte geeignetes schwenkbares Gerüst (10), Mittel zur seitlichen Entnahme der Produkte und Winden (12) zum Schwenken des Gerüstes (10) zwischen der im wesentlichen vertikalen und einer horizontalen Lage enthält,
dadurch gekennzeichnet, daß die Mittel zur Entnahme horizontale Winden (14) mit einem beweglichen Kolben (13) und hakenförmige Mittel (15) zum Ergreifen und zur Entnahme einer Produkte enthaltenden Halterung (4) enthalten, daß das Gestell und der Laufwagen Gleitschienen (5, 6, 7; 8, 9) enthalten, die die Entnahme der Halterungen durch Gleitbewegung ermöglichen, daß jeder Laufwagen senkrechte Winden (18, 19) zum Anheben der Produkte über die Höhe der auf dem Gerüst ruhenden Halterung enthält, um die Entnahme einer gewünschten Zahl von Produkten zu ermöglichen.
